# FASCICULE DE BREVET EUROPEEN

(11) **EP 4 473 874 B1**
(45) Date de publication et mention de la délivrance du brevet: **18.03.2026**
(21) Numéro de dépôt: 24180312.1
(22) Date de dépôt: 05.06.2024
(51) Int. Cl.: A47J 27/21

(54) **BOUILLOIRE ÉQUIPÉE D'UN CIRCUIT D'ÉVACUATION DE VAPEUR**
WASSERKOCHER MIT DAMPFABLASSSCHALTUNG
KETTLE PROVIDED WITH A STEAM DISCHARGE CIRCUIT

(30) Priorité: 09.06.2023 FR 2305817
(43) Date de publication de la demande: 11.12.2024
(73) Titulaire: SEB S.A., 69130 Ecully (FR)
(72) Inventeur: ALLEMAND, Bernard, 69134 ECULLY CEDEX (FR); SMAL, Chloé, 69134 ECULLY CEDEX (FR); MANSEAU, Charles, 69134 ECULLY CEDEX (FR)
(74) Mandataire: SEB Développement

(56) Documents cités:
- CN-A- 112 823 723
- CN-B- 104 138 203
- CN-U- 205 197 772
- GB-A- 2 483 745
- US-A1- 2023 172 385

## Description

### Domaine technique

La présente invention concerne le domaine des appareils de chauffage de liquides, et en particulier des bouilloires électriques.

### Etat de la technique

Le document GB2488204 divulgue une bouilloire électrique comprenant :
- un contenant présentant un axe central configuré pour s'étendre sensiblement verticalement lorsque le contenant repose sur une surface horizontale, le contenant délimitant un volume interne destiné à contenir de l'eau et dans lequel l'eau est destinée à être chauffée et notamment portée à ébullition,
- une poignée de préhension fixée au contenant,
- un bec verseur situé à l'opposé de la poignée de préhension par rapport à l'axe central du contenant,
- un couvercle configuré pour fermer le contenant, le couvercle comprenant une face inférieure configurée pour être située en regard du volume interne, et
- un circuit d'évacuation de vapeur configuré pour convoyer, à l'extérieur du volume interne et par exemple vers l'extérieur de la bouilloire, de la vapeur générée dans le volume interne lors d'une ébullition de l'eau contenue dans le volume interne.

Le circuit d'évacuation de vapeur comprend notamment :
- un premier orifice d'admission de vapeur et un deuxième orifice d'admission de vapeur qui sont prévus sur le couvercle et qui débouchent dans la face inférieure du couvercle et à proximité d'un bord périphérique de la face inférieure du couvercle, les premier et deuxième orifices d'admission de vapeur étant configurés être reliés fluidiquement au volume interne et pour être disposés de part et d'autre d'un plan vertical médian de la bouilloire qui passe par le bec verseur et la poignée de préhension,
- une chambre interne délimitée par le couvercle,
- un premier conduit d'écoulement de vapeur comprenant une première ouverture d'entrée de vapeur reliée fluidiquement au premier orifice d'admission de vapeur et une première ouverture de sortie de vapeur débouchant dans la chambre interne, et un deuxième conduit d'écoulement de vapeur comprenant une deuxième ouverture d'entrée de vapeur reliée fluidiquement au deuxième orifice d'admission de vapeur et une deuxième ouverture de sortie de vapeur débouchant dans la chambre interne, et
- au moins une ouverture d'évacuation de vapeur reliée fluidiquement à la chambre interne et configurée pour permettre une évacuation de la vapeur contenue dans la chambre interne à l'extérieur du couvercle et par exemple vers l'extérieur de la bouilloire.

Lorsqu'une telle bouilloire, remplie jusqu'à son niveau de remplissage maximal, est inclinée vers le bas à la fin d'un cycle d'ébullition de l'eau contenue dans la bouilloire, de l'eau bouillante est susceptible de pénétrer dans les premier et deuxième conduits d'écoulement de vapeur via les premier et deuxième orifices d'admission de vapeur, et, du fait que la pression dans le volume interne continu de croître même après la fin du cycle d'ébullition en raison de l'inertie thermique au sein du volume interne, la quantité d'eau bouillante contenue dans les premier et deuxième conduits d'écoulement de vapeur peut croître (l'eau est « poussée » dans les premier et deuxième conduits d'écoulement de vapeur du fait de la surpression dans le volume interne) jusqu'à amorcer les premier et deuxième conduits d'écoulement de vapeur et induire un écoulement continu d'eau bouillante hors de la bouilloire, via le circuit d'évacuation de vapeur et notamment l'au moins une ouverture d'évacuation de vapeur, bien que le conduit de versage équipant la bouilloire soit maintenu obturé. Or, un tel écoulement d'eau bouillante hors de la bouilloire est susceptible de provoquer des brûlures à un utilisateur.

Pour palier un tel inconvénient, il est connu d'équiper le couvercle avec des clapets antiretours, tels que des clapets à bille, configurés pour empêcher un écoulement d'eau à travers les premier et deuxième conduits d'écoulement de vapeur en cas de renversement ou de basculement vers le bas de la bouilloire. Toutefois, de tels clapets antiretours complexifient la bouilloire et augmentent sensiblement les coûts de fabrication de cette dernière. Le document GB2483745 A divulgue également une bouilloire.

### Résumé de l'invention

La présente invention vise à remédier à tout ou partie de ces inconvénients.

Le problème technique à la base de l'invention consiste notamment à fournir une bouilloire qui soit de structure simple et économique, tout en présentant une grande sécurité d'utilisation.

A cet effet, la présente invention concerne une bouilloire telle que définie dans la revendication 1.

La bouilloire comporte en outre un dispositif de mise à l'air libre prévu sur le couvercle et configuré pour relier fluidiquement le volume interne, délimité par le contenant, à la chambre interne, délimitée par le couvercle, lorsque le couvercle ferme le contenant.

Un tel dispositif de mise à l'air libre permet d'équilibrer les pressions dans le volume interne et dans la chambre interne lors d'un cycle de chauffe de l'eau contenue dans la bouilloire. Ainsi, lorsque la bouilloire est inclinée vers le bas à la fin d'un cycle d'ébullition et que le conduit de versage équipant la bouilloire est maintenu obturé, les risques d'amorçage des premier et deuxième conduits d'écoulement de vapeur sont considérablement réduits, ce qui limite considérablement les risques d'écoulement d'eau bouillante à travers le circuit d'évacuation de vapeur, et donc les risques de brûlure d'un utilisateur.

De plus, la présence d'un tel dispositif de mise à l'air libre permet, lors du versage du contenu de la bouilloire, une entrée d'air à l'intérieur du volume interne au fur et à mesure de la diminution de la quantité d'eau dans la bouilloire, ce qui assure un équilibrage des pressions entre le volume interne et la chambre interne et donc un écoulement optimal de l'eau hors de la bouilloire (sans bruit de gargouillement).

La bouilloire peut en outre présenter une ou plusieurs des caractéristiques suivantes, prises seules ou en combinaison.

Selon un mode de réalisation de l'invention, le couvercle comporte une partie avant située du côté du bec verseur et une partie arrière située du côté de la poignée de préhension.

Selon un mode de réalisation de l'invention, la face inférieure du couvercle comporte une moitié avant située du côté du bec verseur et une moitié arrière située du côté de la poignée de préhension.

Selon l'invention, le dispositif de mise à l'air libre comporte un orifice de mise à l'air libre débouchant dans la face inférieure du couvercle.

Selon un mode de réalisation de l'invention, l'orifice de mise à l'air libre est un orifice calibré. Une telle configuration de l'orifice de mise à l'air libre limite considérablement la quantité d'eau qui est susceptible de pénétrer dans la chambre interne délimitée par le couvercle lors d'une opération de versage de l'eau contenue dans la bouilloire.

Selon un mode de réalisation de l'invention, l'orifice de mise à l'air libre est situé dans une moitié arrière de la face inférieure du couvercle. Une telle disposition de l'orifice de mise à l'air libre permet de limiter encore la quantité d'eau qui est susceptible de pénétrer dans la chambre interne délimitée par le couvercle lors d'une opération de versage de l'eau contenue dans la bouilloire.

Selon un mode de réalisation de l'invention, l'orifice de mise à l'air libre est situé à proximité d'un bord périphérique de la face inférieure du couvercle, et est avantageusement situé à une distance inférieure à 30 mm, et par exemple à 20 mm, du bord périphérique de la face inférieure du couvercle.

Selon un mode de réalisation de l'invention, l'orifice de mise à l'air libre est configuré pour être situé à l'opposé du bec verseur par rapport à l'axe longitudinal central du contenant. Une telle disposition de l'orifice de mise à l'air libre permet de limiter encore la quantité d'eau qui est susceptible de pénétrer dans la chambre interne délimitée par le couvercle lors d'une opération de versage de l'eau contenue dans la bouilloire.

Selon un mode de réalisation de l'invention, l'orifice de mise à l'air libre présente une section de passage inférieure à la section de passage de chacun des premier et deuxième orifices d'admission de vapeur.

Selon un mode de réalisation de l'invention, la bouilloire est dépourvue d'élément d'obturation de l'orifice de mise à l'air libre.

Selon un mode de réalisation de l'invention, le dispositif de mise à l'air libre comporte un élément de filtration configuré pour filtrer un fluide s'écoulant à travers l'orifice de mise à l'air libre.

Selon un mode de réalisation de l'invention, l'élément de filtration est amovible. Selon un mode de réalisation de l'invention, le dispositif de mise à l'air libre comporte une valve positionnée en travers de l'orifice de mise à l'air libre.

Selon l'invention, le circuit d'évacuation de vapeur comporte au moins une ouverture d'évacuation de vapeur, et par exemple une ou plusieurs ouverture(s) d'évacuation de vapeur, prévue sur le couvercle et reliée fluidiquement à la chambre interne délimitée par le couvercle, l'au moins une ouverture d'évacuation de vapeur étant configurée pour permettre une évacuation de la vapeur contenue dans la chambre interne à l'extérieur du couvercle et par exemple vers l'extérieur de la bouilloire.

Selon un mode de réalisation de l'invention, les premier et deuxième conduits d'écoulement de vapeur forment un dispositif anti-déversement, également nommé dispositif anti-débordement, configuré pour empêcher un déversement de l'eau contenue dans le volume interne via le circuit d'évacuation de vapeur lorsque la bouilloire est renversée.

Selon un mode de réalisation de l'invention, la bouilloire est configurée de telle sorte que, lorsque la bouilloire est renversée et que la poignée de préhension et un premier côté latéral du contenant reposent de manière stable sur une surface horizontale, le premier orifice d'admission de vapeur est situé au-dessus du niveau d'eau dans le volume interne, et de telle sorte que, lorsque la bouilloire est renversée et que la poignée de préhension et un deuxième côté latéral du contenant reposent de manière stable sur une surface horizontale, le deuxième orifice d'admission de vapeur est situé au-dessus du niveau d'eau dans le volume interne. Ainsi, la bouilloire selon la présente invention permet d'éviter ou du moins de limiter considérablement les risques d'écoulement d'eau bouillante hors de la bouilloire en cas de renversement de cette dernière.

Selon un mode de réalisation de l'invention, la bouilloire est configurée de telle sorte que, lorsque la bouilloire est renversée et que la poignée de préhension et un premier côté latéral du contenant reposent de manière stable sur une surface horizontale, le premier orifice d'admission de vapeur et la deuxième ouverture de sortie de vapeur sont situés au-dessus du niveau d'eau dans le volume interne, et de telle sorte que, lorsque la bouilloire est renversée et que la poignée de préhension et un deuxième côté latéral du contenant reposent de manière stable sur une surface horizontale, le deuxième orifice d'admission de vapeur et la première ouverture de sortie de vapeur sont situés au-dessus du niveau d'eau dans le volume interne.

Selon un mode de réalisation de l'invention, les première et deuxième ouvertures de sortie de vapeur sont configurées pour être disposées de part et d'autre du plan vertical médian de la bouilloire, et par exemple de manière symétrique par rapport au plan vertical médian de la bouilloire.

Selon un mode de réalisation de l'invention, la première ouverture de sortie de vapeur est située à proximité du deuxième orifice d'admission de vapeur, et la deuxième ouverture de sortie de vapeur est située à proximité du premier orifice d'admission de vapeur. Une telle disposition des première et deuxième ouvertures de sortie de vapeur limite encore les risques d'écoulement d'eau bouillante hors de la bouilloire en cas de renversement de cette dernière.

Selon un mode de réalisation de l'invention, les première et deuxième ouvertures de sortie de vapeur sont situées dans une moitié avant du couvercle.

Selon un autre mode de réalisation de l'invention, les première et deuxième ouvertures de sortie de vapeur sont situées dans une partie arrière de la chambre interne. Une telle disposition des première et deuxième ouvertures de sortie de vapeur limite les risques d'écoulement d'eau dans le couvercle (via les premier et deuxième orifices d'admission de vapeur et les premier et deuxième conduits d'écoulement de vapeur) lorsqu'un utilisateur verse de l'eau bouillante dans un récipient en inclinant vers l'avant et vers le bas la bouilloire. En outre, lorsque la bouilloire comprend un système de contrôle électromécanique, une telle architecture permet de faciliter le transfert de la vapeur vers la poignée et vers un système de contrôle électromécanique de la bouilloire situé en partie basse et propre à désactiver la chauffe de la bouilloire lorsqu'il détecte de la vapeur.

Selon un mode de réalisation de l'invention, les première et deuxième ouvertures de sortie de vapeur sont configurées pour être orientées à l'opposé du bec verseur, c'est-à-dire vers l'arrière de la bouilloire. Ces dispositions limitent encore les risques d'écoulement d'eau dans le couvercle (via les premier et deuxième orifices d'admission de vapeur et les premier et deuxième conduits d'écoulement de vapeur) lorsqu'un utilisateur verse de l'eau bouillante dans un récipient en inclinant vers l'avant et vers le bas la bouilloire. En outre, lorsque la bouilloire comprend un système de contrôle électromécanique, une telle architecture permet de faciliter le transfert de la vapeur vers la poignée et vers un système de contrôle électromécanique de la bouilloire situé en partie basse et propre à désactiver la chauffe de la bouilloire lorsqu'il détecte de la vapeur.

Selon un mode de réalisation de l'invention, le premier conduit d'écoulement de vapeur présente une section de passage qui est sensiblement constante le long de la longueur du premier conduit d'écoulement de vapeur, et le deuxième conduit d'écoulement de vapeur présente une section de passage qui est sensiblement constante le long de la longueur du premier conduit d'écoulement de vapeur.

Selon un mode de réalisation de l'invention, chacun des premier et deuxième conduits d'écoulement de vapeur présente une section transversale qui est sensiblement circulaire.

Selon un mode de réalisation de l'invention, chacun des premier et deuxième conduits d'écoulement de vapeur est flexible.

Selon un mode de réalisation de l'invention, chacun des premier et deuxième conduits d'écoulement de vapeur présente une forme générale en V, la forme générale en V, définie par chacun des premier et deuxième conduits d'écoulement de vapeur, présentant une pointe qui est située dans une partie arrière du couvercle. Une telle configuration des premier et deuxième conduits d'écoulement de vapeur permet de limiter encore la quantité d'eau qui est susceptible de pénétrer dans la chambre interne délimitée par le couvercle lors d'une opération de versage de l'eau contenue dans la bouilloire.

Selon un mode de réalisation de l'invention, la pointe de chaque forme générale en V est configurée pour être orientée à l'opposé du bec verseur.

Selon un mode de réalisation de l'invention, le premier orifice d'admission de vapeur est positionné à proximité de la deuxième ouverture de sortie de vapeur et le deuxième orifice d'admission de vapeur est positionné à proximité de la première ouverture de sortie de vapeur, la pointe de la forme générale en V définie par le premier conduit d'écoulement de vapeur étant située à proximité de la pointe de la forme générale en V définie par le deuxième conduit d'écoulement de vapeur.

Selon un mode de réalisation de l'invention, le premier conduit d'écoulement de vapeur comporte une première portion de conduit primaire qui est sensiblement rectiligne et qui est reliée fluidiquement au premier orifice d'admission de vapeur, une deuxième portion de conduit primaire qui est sensiblement rectiligne et qui comporte la première ouverture de sortie de vapeur, et une portion intermédiaire primaire qui est courbée et qui relie les première et deuxième portions de conduit primaires entre elles, et le deuxième conduit d'écoulement de vapeur comporte une première portion de conduit secondaire qui est sensiblement rectiligne et qui est reliée fluidiquement au deuxième orifice d'admission de vapeur, une deuxième portion de conduit secondaire qui est sensiblement rectiligne et qui comporte la deuxième ouverture de sortie de vapeur, et une portion intermédiaire secondaire qui est courbée et qui relie les première et deuxième portions de conduit secondaires entre elles.

Selon un mode de réalisation de l'invention, les première et deuxième portions de conduit primaires convergent l'une vers l'autre en direction d'une partie arrière du couvercle, et par exemple sensiblement à l'opposé du bec verseur par rapport à l'axe longitudinal central du contenant, et les première et deuxième portions de conduit secondaires convergent l'une vers l'autre en direction de la partie arrière du couvercle, et par exemple sensiblement à l'opposé du bec verseur par rapport à l'axe longitudinal central du contenant.

Selon un mode de réalisation de l'invention, les premier et deuxième conduits d'écoulement de vapeur sont disposés de manière symétrique par rapport au plan vertical médian de la bouilloire.

Selon un mode de réalisation de l'invention, l'axe longitudinal central du contenant est configuré pour s'étendre sensiblement verticalement lorsque le contenant repose sur une surface horizontale.

Selon un mode de réalisation de l'invention, les premier et deuxième conduits d'écoulement de vapeur sont logés dans la chambre interne délimitée par le couvercle.

Selon un mode de réalisation de l'invention, les premier et deuxième orifices d'admission de vapeur sont situés dans une moitié avant de la face inférieure du couvercle.

Selon un mode de réalisation de l'invention, les premier et deuxième orifices d'admission de vapeur sont situés à proximité d'un bord périphérique de la face inférieure du couvercle. Une telle disposition des premier et deuxième orifices d'admission de vapeur limite encore les risques d'écoulement d'eau bouillante hors de la bouilloire en cas de renversement de cette dernière.

Selon un mode de réalisation de l'invention, les premier et deuxième orifices d'admission de vapeur sont configurés pour être disposés de manière symétrique par rapport au plan vertical médian de la bouilloire.

Selon un mode de réalisation de l'invention, les premier et deuxième conduits d'écoulement de vapeur sont configurés pour s'étendre sensiblement horizontalement lorsque le contenant repose sur une surface horizontale.

Selon un autre mode de réalisation de l'invention, le premier conduit d'écoulement de vapeur est configuré pour être incliné par rapport à l'horizontale lorsque le contenant repose sur une surface horizontale, de manière à guider de l'eau contenue dans le premier conduit d'écoulement de vapeur vers le premier orifice d'admission de vapeur, et le deuxième conduit d'écoulement de vapeur est configuré pour être incliné par rapport à l'horizontale lorsque le contenant repose sur une surface horizontale, de manière à guider de l'eau contenue dans le deuxième conduit d'écoulement de vapeur vers le deuxième orifice d'admission de vapeur. Ces dispositions limitent les risques d'accumulation d'eau et de stagnation d'eau dans le couvercle.

Selon un mode de réalisation de l'invention, l'au moins une ouverture d'évacuation de vapeur débouche dans une surface périphérique externe du couvercle.

Selon un mode de réalisation de l'invention, l'au moins une ouverture d'évacuation de vapeur est configurée pour être située à proximité du bec verseur, et par exemple en regard du bec verseur.

Selon un mode de réalisation de l'invention, le contenant comprend une ouverture de remplissage supérieure débouchant dans le volume interne.

Selon un mode de réalisation de l'invention, le couvercle est configuré pour être agencé au niveau de l'ouverture de remplissage supérieure.

Selon un mode de réalisation de l'invention, le bec verseur est situé au niveau de l'ouverture de remplissage supérieure.

Selon un mode de réalisation de l'invention, le contenant comporte le bec verseur.

Selon un mode de réalisation de l'invention, le couvercle est amovible par rapport au contenant.

Selon un mode de réalisation de l'invention, la bouilloire comporte un dispositif de fixation configuré pour fixer de manière amovible, c'est-à-dire de manière temporaire et réversible, le couvercle au contenant.

Selon un mode de réalisation de l'invention, le dispositif de fixation comprend au moins un organe de fixation, tel qu'une patte de fixation ou un doigt de fixation, prévu sur le couvercle et au moins un élément de fixation, tel qu'une encoche de fixation, prévu sur le contenant, l'au moins un organe de fixation étant configuré pour occuper une position de fixation dans laquelle l'au moins un organe de fixation est configuré pour coopérer avec l'au moins un élément de fixation de manière à fixer le couvercle au contenant, et une position de libération dans laquelle l'au moins un organe de fixation est configuré pour libérer l'au moins un élément de fixation de telle sorte que le couvercle peut être retiré du contenant.

Selon un mode de réalisation de l'invention, l'au moins un organe de fixation est monté mobile par rapport au couvercle entre la position de fixation et la position de libération.

Selon un mode de réalisation de l'invention, l'au moins un organe de fixation est monté coulissant par rapport au couvercle selon une direction de coulissement. La direction de coulissement peut s'étendre sensiblement perpendiculairement à un axe central du couvercle, et par exemple sensiblement radialement par rapport à l'axe central du couvercle.

Selon un mode de réalisation de l'invention, le dispositif de fixation comporte un organe de rappel configuré pour rappeler l'au moins un organe de fixation dans la position de fixation.

Selon un mode de réalisation de l'invention, la bouilloire comporte un mécanisme d'actionnement prévu sur le couvercle et configuré pour déplacer l'au moins organe de fixation dans la position de libération lorsque le mécanisme d'actionnement est actionné par un utilisateur.

Selon un mode de réalisation de l'invention, le mécanisme d'actionnement comporte un organe d'actionnement qui est actionnable manuellement par un utilisateur et qui est configuré pour déplacer l'au moins un organe de fixation de la position de fixation à la position de libération, l'organe d'actionnement étant monté mobile entre une première position d'actionnement et une deuxième position d'actionnement, l'organe d'actionnement et l'au moins un organe de fixation étant configurés de telle sorte qu'un déplacement de l'organe d'actionnement de la première position d'actionnement à la deuxième position d'actionnement entraîne un déplacement de l'au moins un organe de fixation de la position de fixation à la position de libération. Une telle configuration du mécanisme d'actionnement permet à un utilisateur de pouvoir déposer le couvercle par un simple actionnement du mécanisme d'actionnement.

Selon un mode de réalisation de l'invention, l'au moins un organe d'actionnement comporte une partie de manipulation configurée pour être manipulée par un utilisateur.

Selon un mode de réalisation de l'invention, le mécanisme d'actionnement comporte un élément de rappel, tel qu'un ressort de rappel, configuré pour rappeler l'organe d'actionnement dans la première position d'actionnement.

Selon un mode de réalisation de l'invention, la bouilloire comporte un dispositif d'indexage angulaire, également nommé dispositif de détrompage, configuré pour indexer angulairement le couvercle par rapport au contenant, de manière à définir une unique position de fixation du couvercle sur le contenant.

Selon un mode de réalisation de l'invention, le dispositif d'indexage angulaire comporte au moins un élément d'indexage prévu sur le contenant, et au moins un organe d'indexage prévu sur le couvercle et configuré pour coopérer avec l'au moins élément d'indexage lorsque le couvercle est fixé au contenant.

Selon un mode de réalisation de l'invention, l'au moins un organe d'indexage est situé dans une partie avant du couvercle.

Selon un mode de réalisation de l'invention, le couvercle comporte un conduit de versage configuré pour convoyer vers le bec verseur de l'eau contenue dans le volume interne, la bouilloire comprenant un obturateur monté mobile sur le couvercle entre une position de fermeture dans laquelle l'obturateur obture le conduit de versage et empêche un écoulement d'eau à travers le conduit de versage et une position d'ouverture dans laquelle l'obturateur libère le conduit de versage et autorise un écoulement d'eau à travers le conduit de versage. Une telle configuration du couvercle limite considérablement les risques d'écoulement d'eau à travers le bec verseur lorsque la bouilloire est renversée.

Selon un mode de réalisation de l'invention, le conduit de versage comporte une ouverture d'entrée d'eau débouchant dans la face inférieure du couvercle et une ouverture de sortie d'eau débouchant dans une surface périphérique externe du couvercle.

Selon un mode de réalisation de l'invention, l'au moins une ouverture d'évacuation de vapeur est située à proximité de l'ouverture de sortie d'eau.

Selon un mode de réalisation de l'invention, la bouilloire comporte un système d'actionnement prévu sur le couvercle et configuré pour déplacer l'obturateur entre la position d'ouverture et la position de fermeture.

Selon un mode de réalisation de l'invention, le système d'actionnement comporte un bouton d'actionnement actionnable par un utilisateur et mobile entre une première position de bouton et une deuxième position de bouton, le système d'actionnement étant configuré de telle sorte qu'un déplacement, par un utilisateur, du bouton d'actionnement de la première position de bouton à la deuxième position de bouton entraîne un déplacement de l'obturateur de la position de fermeture à la position d'ouverture.

Selon un mode de réalisation de l'invention, le système d'actionnement comporte un dispositif de commande bistable, par exemple du type stylo à bille, configuré de telle sorte qu'un déplacement, par un utilisateur, du bouton d'actionnement de la première position de bouton à la deuxième position de bouton entraîne un déplacement de l'obturateur de la position de fermeture à la position d'ouverture, et de telle sorte qu'un déplacement, par un utilisateur, du bouton d'actionnement de la deuxième position de bouton à la première position de bouton entraîne un déplacement de l'obturateur de la position d'ouverture à la position de fermeture.

Selon un mode de réalisation de l'invention, le contenant comporte un fond chauffant situé sous le volume interne et configuré pour chauffer l'eau contenue dans le volume interne. De façon avantageuse, le fond chauffant loge un élément électrique chauffant.

Selon un mode de réalisation de l'invention, la bouilloire comporte une base de support sur laquelle est destiné à reposer le contenant.

Selon un mode de réalisation de l'invention, les premier et deuxième conduits d'écoulement de vapeur sont formés respectivement par des premier et deuxième tubes d'écoulement de vapeur. De façon avantageuse, chacune des premier et deuxième tubes d'écoulement de vapeur est formé d'un seul tenant et est monobloc.

### Brève description des figures

L'invention sera mieux comprise à l'aide de la description qui suit en référence aux dessins schématiques annexés représentant, à titre d'exemples non limitatifs, plusieurs formes d'exécution de cette bouilloire.
Figure 1 est une vue en perspective de dessus d'une bouilloire selon l'invention.
Figure 2 est une vue en perspective de dessus d'un contenant de la bouilloire de la figure 1.
Figure 3 est une vue en perspective de dessus d'un couvercle de la bouilloire de la figure 1.
Figure 4 est une vue de face du couvercle de la figure 3.
Figure 5 est une vue en perspective de dessous du couvercle de la figure 3.
Figure 6 est une vue de dessous du couvercle de la figure 3.
Figure 7 est une vue partielle en perspective de dessus du couvercle de la figure 3 dans laquelle un boîtier supérieur du couvercle a été retiré.
Figure 8 est une vue partielle de dessous du couvercle de la figure 3 dans laquelle le boîtier inférieur du couvercle a été retiré.
Figure 9 est une vue partielle de côté de la bouilloire de la figure 1 montrant la bouilloire renversée sur une surface horizontale et occupant une position stable dans laquelle une poignée de préhension de la bouilloire et le côté latéral gauche du contenant prennent appui sur la surface horizontale.
Figure 10 est une vue partielle de côté de la bouilloire de la figure 1 montrant la bouilloire renversée sur une surface horizontale et occupant une position stable dans laquelle une poignée de préhension de la bouilloire et le côté latéral droit du contenant prennent appui sur la surface horizontale.
Figure 11 est une vue en perspective tronquée du couvercle de la figure 3.

### Description détaillée

Dans le présent document, les termes « avant » et « arrière » sont définis par rapport à une utilisation de la bouilloire durant laquelle l'utilisateur tient la bouilloire par la poignée de préhension et la maintient sensiblement horizontalement, et le bec verseur est situé à l'opposé de l'utilisateur.

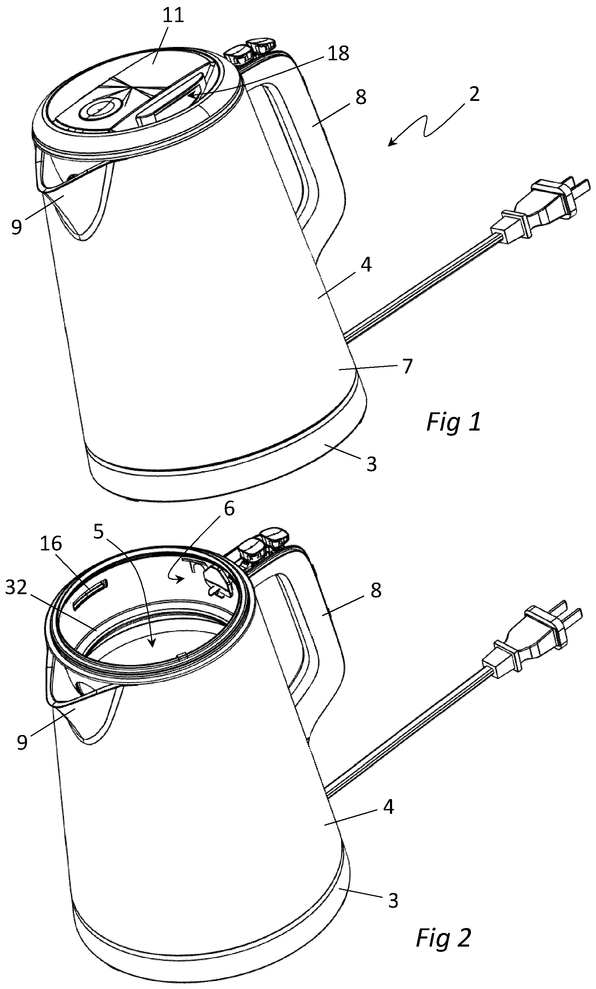

Les figures 1 à 11 représentent une bouilloire 2, et en particulier une bouilloire électrique, selon l'invention.

Dans la suite de la description, on entend par bouilloire un dispositif destiné à chauffer de l'eau à une température supérieure à 50°C, de préférence supérieure à 70°C.

La bouilloire 2 comporte une base de support 3 configurée pour être alimentée électriquement par un cordon d'alimentation, et un contenant 4 configuré pour reposer sur la base de support 3.

Le contenant 4 présente un axe longitudinal central A configuré pour s'étendre sensiblement verticalement lorsque le contenant 4 repose sur une surface horizontale. De façon avantageuse, le contenant 4 présente une forme générale de révolution autour de l'axe longitudinal central A.

Le contenant 4 délimite un volume interne 5 destiné à contenir de l'eau et dans lequel l'eau est destinée à être chauffée et notamment portée à ébullition. Le contenant 4 comprend en outre une ouverture de remplissage supérieure 6 débouchant dans le volume interne 5.

Le contenant 4 comporte de plus un fond chauffant 7 situé sous le volume interne 5 et configuré pour chauffer l'eau contenue dans le volume interne 5. De façon connue, le fond chauffant 7 loge un élément électrique chauffant (non représenté sur les figures) configuré pour être alimenté électriquement lorsque le contenant 4 repose sur la base de support 3.

La bouilloire 2 comporte en outre une poignée de préhension 8 fixée au contenant 4, et un bec verseur 9 situé à l'opposé de la poignée de préhension 8 par rapport à l'axe longitudinal central A du contenant 4. Le bec verseur 9 peut par exemple être prévu sur le contenant 4 et être situé au niveau de l'ouverture de remplissage supérieure 6.

La bouilloire 2 comporte en outre un couvercle 11 configuré pour fermer le contenant 4, et plus particulièrement pour être agencé au niveau de l'ouverture de remplissage supérieure 6. Le couvercle 11 est pourvu d'une face inférieure 12 configurée pour être située en regard du volume interne 5 du contenant 4. De façon avantageuse, la bouilloire 2 comporte un joint d'étanchéité annulaire 13 fixé à la face inférieure 12 du couvercle 11 et configuré pour coopérer de manière étanche avec le contenant 4.

La bouilloire 2 comporte de plus un dispositif de fixation configuré pour fixer de manière amovible, c'est-à-dire de manière temporaire et réversible, le couvercle 11 au contenant 4.

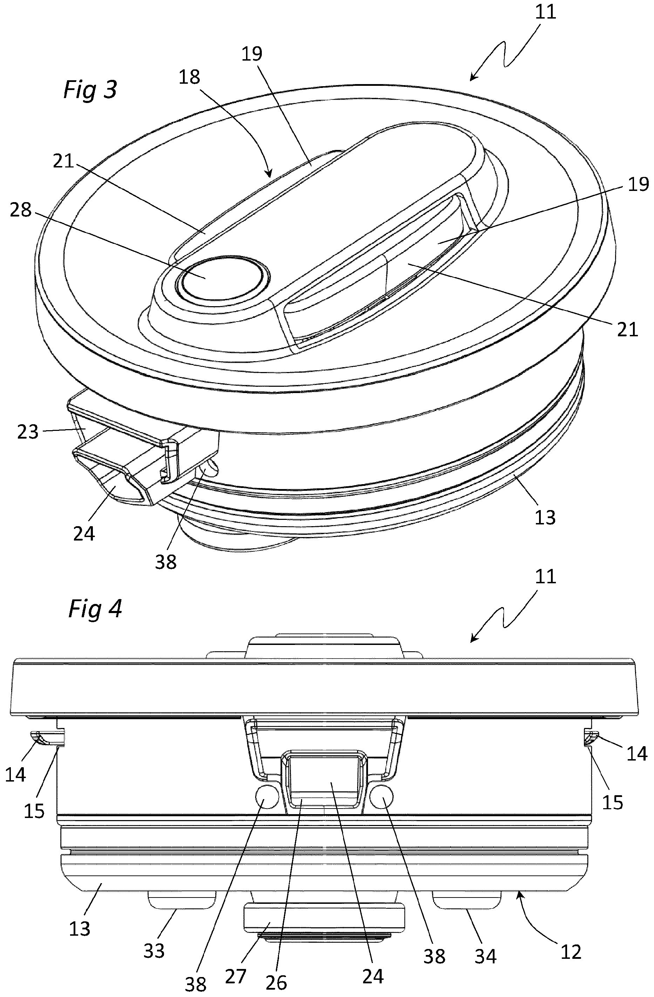

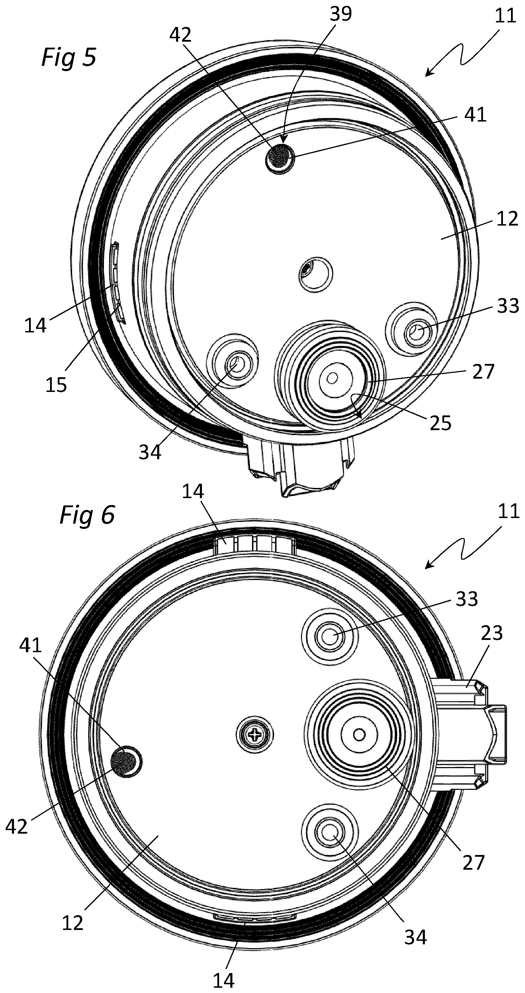

Selon le mode de réalisation représenté sur les figures, le dispositif de fixation comprend deux organes de fixation 14 (voir notamment les figures 4 et 6), tels que des doigts de fixation, prévus sur le couvercle 11 et diamétralement opposés. Chaque organe de fixation 14 est logé dans le couvercle 11 et est configuré pour faire saillie hors du couvercle 11 à travers une ouverture traversante 15 respective prévue sur le couvercle 11. De façon avantageuse, chaque ouverture traversante 15 débouche dans la surface périphérique externe du couvercle 11 et au-dessus du joint d'étanchéité annulaire 13.

Le dispositif de fixation comprend en outre deux éléments de fixation 16 (voir la figure 2), tels que des encoches de fixation ou des languettes de retenue, prévus sur une surface interne du contenant 4 et situés à proximité de l'ouverture de remplissage supérieure 6. Selon le mode de réalisation représenté sur les figures, les organes de fixation 14 sont plus particulièrement configurés pour respectivement pénétrer dans les éléments de fixation 16 lorsque le couvercle 11 est fixé au contenant 4.

Selon le mode de réalisation représenté sur les figures, les organes de fixation 14 sont montés coulissants par rapport au couvercle 11 selon une direction de coulissement et entre une position de fixation dans laquelle chaque organe de fixation 14 est configuré pour coopérer avec l'élément de fixation 16 respectif de manière à fixer le couvercle 11 au contenant 4, et une position de libération dans laquelle chaque organe de fixation 14 est configuré pour libérer l'élément de fixation 16 respectif de telle sorte que le couvercle 11 peut être retiré du contenant 4. De façon avantageuse, la direction de coulissement s'étend sensiblement radialement par rapport à un axe central du couvercle 11.

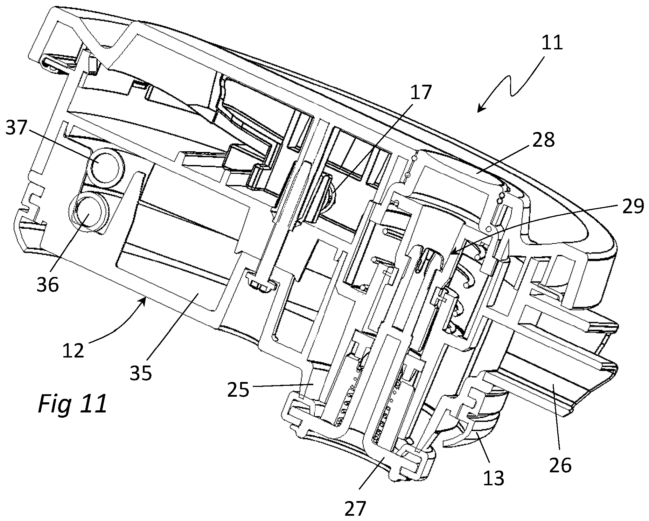

Le dispositif de fixation peut en outre comporter deux organes de rappel 17 (voir la figure 11) logés dans le couvercle 11 et configurés pour rappeler respectivement les organes de fixation 14 dans la position de fixation.

Comme montré plus particulièrement sur les figures 1 et 3, la bouilloire 2 comporte un mécanisme d'actionnement 18 prévu sur le couvercle 11 et configuré pour déplacer les organes de fixation 14 dans la position de libération lorsque le mécanisme d'actionnement 18 est actionné par un utilisateur.

Le mécanisme d'actionnement 18 comporte plus particulièrement deux organes d'actionnement 19 (voir la figure 3) qui sont actionnables manuellement par un utilisateur et qui sont configurés pour déplacer les organes de fixation 14 de la position de fixation à la position de libération. Selon le mode de réalisation représenté sur les figures, les organes d'actionnement 19 comportent respectivement deux parties de manipulation 21 qui sont accessibles depuis une face supérieure du couvercle 11 et qui sont configurées pour être manipulées par un utilisateur.

Les organes d'actionnement 19 sont montés coulissants par rapport au couvercle 11 entre une première position d'actionnement et une deuxième position d'actionnement. Les organes d'actionnement 19 et les organes de fixation 14 sont configurés de telle sorte qu'un déplacement des organes d'actionnement 19 de la première position d'actionnement à la deuxième position d'actionnement entraîne un déplacement des organes de fixation 14 de la position de fixation à la position de libération. De façon avantageuse, chaque organe d'actionnement 19 et l'organe de fixation 14 respectif sont réalisés en une seule pièce, et les deux organes d'actionnement 19 sont configurés pour déplacer les organes de fixation 14 dans la position de libération par pincement des deux parties de manipulation 21, c'est-à-dire par un rapprochement des deux parties de manipulation 21 l'une de l'autre.

Comme montré plus particulièrement sur la figure 3, la bouilloire 2 peut comporter un dispositif d'indexage angulaire, également nommé dispositif de détrompage, configuré pour définir une unique position de fixation du couvercle 11 sur le contenant 4. Le dispositif d'indexage angulaire peut par exemple comporter au moins un élément d'indexage, tel qu'un logement d'indexage, prévu sur le contenant 4 et au moins un bossage d'indexage 23 prévu sur le couvercle 11 et configuré pour coopérer avec l'au moins un élément d'indexage.

Le couvercle 11 comporte en outre un conduit de versage 24 configuré pour convoyer vers le bec verseur 9 de l'eau contenue dans le volume interne 5. Le conduit de versage 24 comporte plus particulièrement une ouverture d'entrée d'eau 25 débouchant dans une moitié avant de la face inférieure 12 du couvercle 11, et une ouverture de sortie d'eau 26 débouchant dans une surface périphérique externe du couvercle 11 et destinée à être située sensiblement en regard du bec verseur 9 lorsque le couvercle 11 est fixé au contenant 4.

La bouilloire 2 comprend en outre un obturateur 27 (voir les figures 4 à 6) monté mobile sur le couvercle 11 entre une position de fermeture dans laquelle l'obturateur 27 obture le conduit de versage 24 et empêche un écoulement d'eau à travers le conduit de versage 24, et une position d'ouverture dans laquelle l'obturateur 27 libère le conduit de versage 24 et autorise un écoulement d'eau à travers le conduit de versage 24.

La bouilloire 2 comporte de plus un système d'actionnement prévu sur le couvercle 11 et configuré pour déplacer l'obturateur 27 entre la position d'ouverture et la position de fermeture. Selon le mode de réalisation représenté sur les figures, le système d'actionnement comporte un bouton d'actionnement 28 actionnable par un utilisateur et mobile entre une première position de bouton et une deuxième position de bouton, le système d'actionnement étant configuré de telle sorte qu'un déplacement, par un utilisateur, du bouton d'actionnement 28 de la première position de bouton à la deuxième position de bouton entraîne un déplacement de l'obturateur 27 de la position de fermeture à la position d'ouverture.

Selon le mode de réalisation représenté sur les figures, le système d'actionnement comporte un dispositif de commande bistable 29, par exemple du type stylo à bille, configuré de telle sorte qu'un déplacement, par un utilisateur, du bouton d'actionnement 28 de la première position de bouton à la deuxième position de bouton entraîne un déplacement de l'obturateur 27 de la position de fermeture à la position d'ouverture, et de telle sorte qu'un déplacement, par un utilisateur, du bouton d'actionnement 28 de la deuxième position de bouton à la première position de bouton entraîne un déplacement de l'obturateur 27 de la position d'ouverture à la position de fermeture. Les première et deuxième positions de bouton correspondent donc à des positions stables du bouton d'actionnement 28.

La bouilloire 2 peut également comporter un panier à thé (non visible sur les figures) configuré pour reposer sur une portion de retenue 32 prévue sur le contenant 4 et pour être disposé dans le volume interne 5 du contenant 4. De façon avantageuse, le panier à thé est amovible.

La bouilloire 2 comporte également un circuit d'évacuation de vapeur configuré pour convoyer, à l'extérieur du volume interne 5 et par exemple vers l'extérieur de la bouilloire 2, de la vapeur générée dans le volume interne 5 lors d'une ébullition de l'eau contenue dans le volume interne 5.

Le circuit d'évacuation de vapeur comprend notamment un premier orifice d'admission de vapeur 33 et un deuxième orifice d'admission de vapeur 34 qui sont prévus sur le couvercle 11 et qui débouchent dans la face inférieure 12 du couvercle 11 et à proximité d'un bord périphérique de la face inférieure 12 du couvercle 11. Lorsque le couvercle 11 est fixé au contenant 4 et que ce dernier repose sur une surface horizontale, les premier et deuxième orifices d'admission de vapeur 33, 34 débouchent dans le volume interne 5 délimité par le contenant 4 et au-dessus d'un niveau de remplissage maximal du contenant 4.

Selon le mode de réalisation représenté sur les figures, les premier et deuxième orifices d'admission de vapeur 33, 34 sont disposés de part et d'autre d'un plan vertical médian P de la bouilloire 2 qui passe par le bec verseur 9 et la poignée de préhension 8, et sont situés dans la moitié avant de la face inférieure 12 du couvercle 11. De façon avantageuse, les premier et deuxième orifices d'admission de vapeur 33, 34 sont disposés de manière symétrique par rapport au plan vertical médian P de la bouilloire 2.

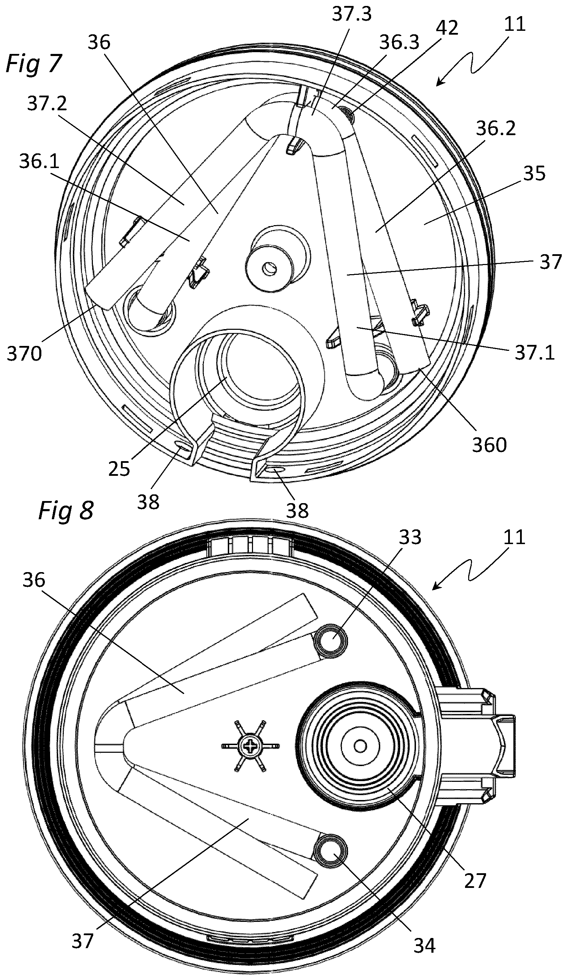

Comme montré plus particulièrement sur les figures 7 et 11, le circuit d'évacuation de vapeur comprend également :
- une chambre interne 35 délimitée par le couvercle 11,
- un premier conduit d'écoulement de vapeur 36 comprenant une première ouverture d'entrée de vapeur reliée fluidiquement au premier orifice d'admission de vapeur 33 et une première ouverture de sortie de vapeur 360 débouchant dans la chambre interne 35 délimitée par le couvercle 11, et
- un deuxième conduit d'écoulement de vapeur 37 comprenant une deuxième ouverture d'entrée de vapeur reliée fluidiquement au deuxième orifice d'admission de vapeur 34 et une deuxième ouverture de sortie de vapeur 370 débouchant dans la chambre interne 35.

Les premier et deuxième conduits d'écoulement de vapeur 36, 37 forment un dispositif anti-déversement, également nommé dispositif anti-débordement, configuré pour empêcher un déversement de l'eau contenue dans le volume interne 5 via le circuit d'évacuation de vapeur lorsque la bouilloire 2 est renversée.

Selon le mode de réalisation représenté sur les figures, et notamment comme visible à la figure 7, les premier et deuxième conduits d'écoulement de vapeur 36, 37 sont flexibles et sont logés dans la chambre interne 35. Les premier et deuxième conduits d'écoulement de vapeur 36, 37 peuvent par exemple être formés respectivement par des premier et deuxième tubes d'écoulement de vapeur qui sont avantageusement formés d'un seul tenant et donc monoblocs.

De façon avantageuse, chacun des premier et deuxième conduits d'écoulement de vapeur 36, 37 présente une section transversale qui est circulaire et une section de passage qui est sensiblement constante le long de sa longueur.

Les première et deuxième ouvertures de sortie de vapeur 360, 370 sont plus particulièrement configurées pour être disposées de part et d'autre du plan vertical médian P de la bouilloire 2, et avantageusement pour être disposées de manière symétrique par rapport au plan vertical médian P de la bouilloire 2.

Selon le mode de réalisation représenté sur les figures, chacun des premier et deuxième conduits d'écoulement de vapeur 36, 37 présente une forme générale en V, et les première et deuxième ouvertures de sortie de vapeur 360, 370 sont situées dans une moitié avant du couvercle 11.

Selon le mode de réalisation représenté sur les figures, la forme générale en V, définie par chacun des premier et deuxième conduits d'écoulement de vapeur 36, 37, présente une pointe qui est située dans une partie arrière du couvercle 11, et qui est plus particulièrement configurée pour être orientée à l'opposé du bec verseur 9. Une telle configuration des premier et deuxième conduits d'écoulement de vapeur 36, 37 permet de limiter la quantité d'eau qui est susceptible de pénétrer dans la chambre interne 35 délimitée par le couvercle 11 lors d'une opération de versage de l'eau contenue dans la bouilloire 2.

De façon avantageuse, les premier et deuxième conduits d'écoulement de vapeur 36, 37 sont disposés de manière symétrique par rapport au plan vertical médian P de la bouilloire 2, et sont configurés pour s'étendre sensiblement horizontalement lorsque le contenant 4 repose sur une surface horizontale.

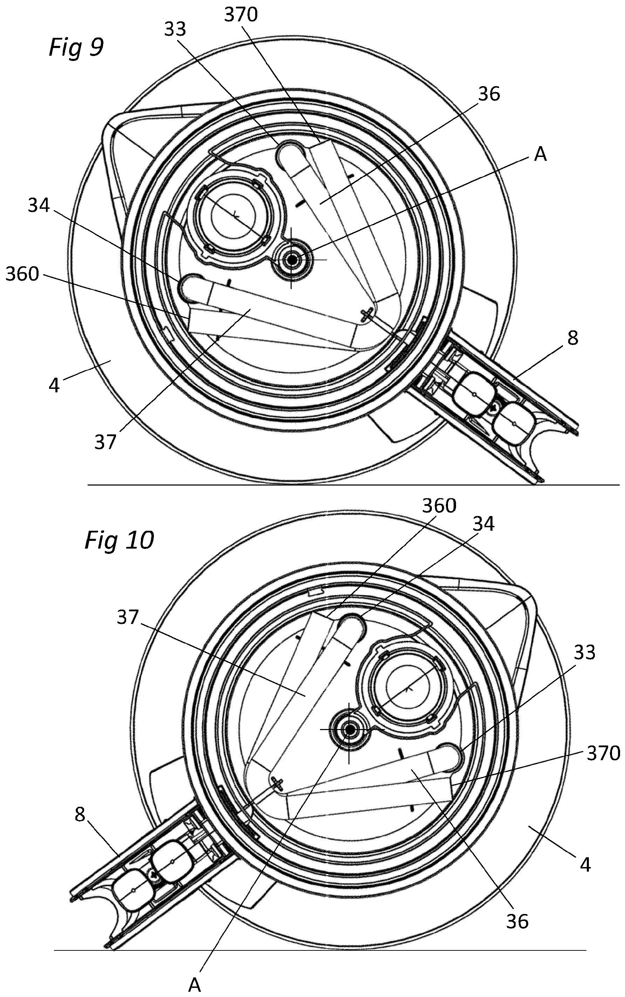

Selon le mode de réalisation représenté sur les figures, la première ouverture de sortie de vapeur 360 est située à proximité du deuxième orifice d'admission de vapeur 34, et la deuxième ouverture de sortie de vapeur 370 est située à proximité du premier orifice d'admission de vapeur 33. La bouilloire 2 est ainsi plus particulièrement configurée de telle sorte que, lorsque la bouilloire 2 est renversée et que la poignée de préhension 8 et un premier côté latéral du contenant 4 reposent de manière stable sur une surface horizontale (voir la figure 9), le premier orifice d'admission de vapeur 33 et la deuxième ouverture de sortie de vapeur 370 sont situés au-dessus du niveau d'eau dans le volume interne, et de telle sorte que, lorsque la bouilloire 2 est renversée et que la poignée de préhension 8 et un deuxième côté latéral du contenant 4 reposent de manière stable sur une surface horizontale (voir la figure 10), le deuxième orifice d'admission de vapeur 34 et la première ouverture de sortie de vapeur 360 sont situés au-dessus du niveau d'eau dans le volume interne. Ainsi, la bouilloire 2 selon la présente invention permet d'éviter ou du moins de limiter considérablement les risques d'écoulement d'eau bouillante hors de la bouilloire 2 en cas de renversement de cette dernière, tout en permettant d'optimiser le volume de remplissage maximal du contenant 4 de la bouilloire 2.

Comme montré sur la figure 7, le premier conduit d'écoulement de vapeur 36 comporte une première portion de conduit primaire 36.1 qui est rectiligne et qui est reliée fluidiquement au premier orifice d'admission de vapeur 33, une deuxième portion de conduit primaire 36.2 qui est rectiligne et qui comporte la première ouverture de sortie de vapeur 360, et une portion intermédiaire primaire 36.3 qui est courbée et qui relie les première et deuxième portions de conduit primaires 36.1, 36.2 entre elles. De façon similaire, le deuxième conduit d'écoulement de vapeur 37 comporte une première portion de conduit secondaire 37.1 qui est rectiligne et qui est reliée fluidiquement au deuxième orifice d'admission de vapeur 34, une deuxième portion de conduit secondaire 37.2 qui est rectiligne et qui comporte la deuxième ouverture de sortie de vapeur 370, et une portion intermédiaire secondaire 37.3 qui est courbée et qui relie les première et deuxième portions de conduit secondaires 37.1, 37.2 entre elles.

De façon avantageuse, les première et deuxième portions de conduit primaires 36.1, 36.2 convergent l'une vers l'autre en direction d'une partie arrière du couvercle 11, et par exemple sensiblement à l'opposé du bec verseur 9 par rapport à l'axe longitudinal central A du contenant 4, et les première et deuxième portions de conduit secondaires 37.1, 37.2 convergent l'une vers l'autre en direction de la partie arrière du couvercle 11, et par exemple sensiblement à l'opposé du bec verseur 9 par rapport à l'axe longitudinal central A du contenant 4.

Le circuit d'évacuation de vapeur comprend de plus plusieurs ouvertures d'évacuation de vapeur 38 prévues sur le couvercle 11 et reliées fluidiquement à la chambre interne 35 délimitée par le couvercle 11. Les ouvertures d'évacuation de vapeur 38 sont configurées pour permettre une évacuation de la vapeur contenue dans la chambre interne 35 vers l'extérieur de la bouilloire 2.

Selon le mode de réalisation représenté sur les figures, les ouvertures d'évacuation de vapeur 38 débouchent dans une surface périphérique externe du couvercle 11, et sont situées à proximité de l'ouverture de sortie d'eau 26. Les ouvertures d'évacuation de vapeur 38 sont donc configurées pour être situées à proximité du bec verseur 9, et par exemple pour être situées en regard du bec verseur 9, lorsque le couvercle 11 est fixé au contenant 4. Une telle configuration de la bouilloire 2 permet une évacuation de la vapeur hors du contenant 4 via le couvercle 11 et le bec verseur 9.

Avantageusement, la bouilloire 2 est dépourvue d'élément d'obturation du circuit d'évacuation de vapeur.

Comme montré plus particulièrement sur les figures 9 et 10, la bouilloire 2 est configurée :
- de telle sorte que, lorsque la bouilloire 2 est renversée et que la poignée de préhension 8 et un premier côté latéral, à savoir le côté gauche, du contenant 4 reposent de manière stable sur une surface horizontale, le premier orifice d'admission de vapeur 33 est situé au-dessus du niveau d'eau dans le volume interne 5, et
- de telle sorte que, lorsque la bouilloire 2 est renversée et que la poignée de préhension 8 et un deuxième côté latéral, à savoir le côté droit, du contenant 4 reposent de manière stable sur une surface horizontale, le deuxième orifice d'admission de vapeur 34 est situé au-dessus du niveau d'eau dans le volume interne 5.

Ainsi, la bouilloire 2 selon la présente invention permet d'éviter ou du moins de limiter considérablement les risques d'écoulement d'eau bouillante hors de la bouilloire 2 en cas de renversement de cette dernière.

La bouilloire 2 comporte en outre un dispositif de mise à l'air libre 39 prévu sur le couvercle 11 et configuré pour relier fluidiquement le volume interne 5, délimité par le contenant 4, à la chambre interne 35, délimitée par le couvercle 11, lorsque le couvercle 11 est fixé au contenant 4.

Le dispositif de mise à l'air libre 39 comporte un orifice de mise à l'air libre 41 débouchant dans la face inférieure 12 du couvercle 11. L'orifice de mise à l'air libre 41 est plus particulièrement formé par un orifice calibré, et présente une section de passage inférieure à la section de passage de chacun des premier et deuxième orifices d'admission de vapeur 33, 34.

De façon avantageuse, l'orifice de mise à l'air libre 41 est situé dans une moitié arrière de la face inférieure 12 du couvercle 11, et à proximité du bord périphérique de la face inférieure 12 du couvercle 11. Selon le mode de réalisation représenté sur les figures, l'orifice de mise à l'air libre 41 est configuré pour être situé à l'opposé du bec verseur 9 par rapport à l'axe longitudinal central A du contenant 4. L'orifice de mise à l'air libre 41 a par exemple un diamètre compris entre 1 et 15 mm, de préférence inférieur à 5 mm, de préférence égal à 3.

Un tel dispositif de mise à l'air libre 39 permet d'équilibrer les pressions dans le volume interne 5 et dans la chambre interne 35 lors d'un cycle de chauffe de l'eau contenue dans la bouilloire 2. Ainsi, lorsque la bouilloire 2 est inclinée vers le bas à la fin d'un cycle d'ébullition et que le conduit de versage 24 équipant le couvercle 11 est maintenu obturé, les risques d'amorçage des premier et deuxième conduits d'écoulement de vapeur 36, 37 sont considérablement réduits, ce qui limite considérablement les risques d'écoulement d'eau bouillante à travers le circuit d'évacuation de vapeur (et notamment à travers les ouvertures d'évacuation de vapeur 38), et donc les risques de brûlure d'un utilisateur.

En outre, la disposition spécifique de l'orifice de mise à l'air libre 41 (dans une moitié arrière de la face inférieure 12 du couvercle 11, et à proximité du bord périphérique de la face inférieure 12 du couvercle 11) permet de limiter encore la quantité d'eau qui est susceptible de pénétrer dans la chambre interne 35 délimitée par le couvercle 11 lors d'une opération de versage de l'eau contenue dans la bouilloire 2.

De plus, la présence d'un tel dispositif de mise à l'air libre 39 permet, lors du versage du contenu de la bouilloire 2, une entrée d'air à l'intérieur du volume interne 5 au fur et à mesure de la diminution de la quantité d'eau dans la bouilloire 2, ce qui assure un équilibrage des pressions entre le volume interne 5 et la chambre interne 35 et donc un écoulement optimal de l'eau hors de la bouilloire 2 (sans bruit de gargouillement).

Le dispositif de mise à l'air libre 39 comporte en outre un élément de filtration 42 configuré pour filtrer un fluide s'écoulant à travers l'orifice de mise à l'air libre 41. De façon avantageuse, l'élément de filtration 42 est amovible afin de permettre par exemple son nettoyage ou son remplacement.

En outre, le dispositif de mise à l'air libre 39 est avantageusement dépourvu d'élément d'obturation. La structure du dispositif de mise à l'air libre 39 et du circuit d'évacuation de vapeur est ainsi simplifiée.

En variante, le dispositif de mise à l'air libre 39 pourrait comprendre une valve formée par exemple par une pastille silicone comprenant une fente formée par exemple par une croie fendue réalisée dans la matière de la pastille. La valve est positionnée en travers de l'orifice de mise à l'air libre 41.

Selon un autre mode de réalisation de l'invention non représenté sur les figures, les première et deuxième ouvertures de sortie de vapeur 360, 370 pourraient être situées dans une partie arrière de la chambre interne 35, et être configurées pour être orientées sensiblement à l'opposé du bec verseur 9, c'est-à-dire vers l'arrière de la bouilloire 2.

Selon un autre mode de réalisation de l'invention non représenté sur les figures, la bouilloire 2 pourrait comporter un dispositif de contrôle électromécanique comportant un élément bimétallique, et le circuit d'évacuation de vapeur pourrait comporter au moins une ouverture d'évacuation de vapeur 38 qui est configurée pour diriger la vapeur contenue dans la chambre interne 35 vers l'élément bimétallique, le dispositif de contrôle électromécanique étant configuré de telle sorte qu'un afflux de vapeur sur l'élément bimétallique déclenche un arrêt de la chauffe de la bouilloire 2.

L'élément bimétallique peut par exemple être disposé dans la poignée de préhension 8. Dans ce cas, l'au moins une ouverture d'évacuation de vapeur 38 est prévue dans une partie arrière du couvercle 11 et est configurée pour être orientée vers la poignée de préhension 8.

Selon une variante de réalisation de l'invention, l'élément bimétallique pourrait être disposé dans une partie inférieure du contenant 4. Dans ce cas, l'au moins une ouverture d'évacuation de vapeur 38 est prévue dans une partie arrière du couvercle 11 et est configurée pour être reliée fluidiquement à un tube vapeur qui est agencé dans le contenant 4 et qui est relié fluidiquement à l'élément bimétallique.

Bien entendu, la présente invention n'est nullement limitée aux modes de réalisation décrits et illustrés qui n'ont été donnés qu'à titre d'exemples. Des modifications restent possibles, notamment du point de vue de la constitution des divers éléments ou par substitution d'équivalents techniques, sans sortir pour autant du domaine de protection de l'invention telle que définie par les revendications.

## Revendications

1. Bouilloire (2) comprenant :
- un contenant (4) présentant un axe longitudinal central (A) et délimitant un volume interne (5) destiné à contenir de l'eau et dans lequel l'eau est destinée à être chauffée,
- un couvercle (11) configuré pour fermer le contenant (4), le couvercle (11) comprenant une face inférieure (12) configurée pour être située en regard du volume interne (5),
- une poignée de préhension (8),
- un bec verseur (9) configuré pour être situé à l'opposé de la poignée de préhension (8) par rapport à l'axe longitudinal central (A) du contenant (4), et
- un circuit d'évacuation de vapeur configuré pour convoyer, à l'extérieur du volume interne (5), de la vapeur générée dans le volume interne (5) lors d'une ébullition de l'eau contenue dans le volume interne (5), le circuit d'évacuation de vapeur comportant :
∘ un premier orifice d'admission de vapeur (33) et un deuxième orifice d'admission de vapeur (34) qui sont prévus sur le couvercle (11) et qui débouchent dans la face inférieure (12) du couvercle (11), les premier et deuxième orifices d'admission de vapeur (33, 34) étant configurés pour être reliés fluidiquement au volume interne (5) délimité par le contenant (4), et pour être disposés de part et d'autre d'un plan vertical médian (P) de la bouilloire (2) qui passe par la poignée de préhension (8),
∘ une chambre interne (35) délimitée par le couvercle (11),
∘ un premier conduit d'écoulement de vapeur (36) comprenant une première ouverture d'entrée de vapeur reliée fluidiquement au premier orifice d'admission de vapeur (33) et une première ouverture de sortie de vapeur (360) débouchant dans la chambre interne (35), et un deuxième conduit d'écoulement de vapeur **(37) comprenant** une deuxième ouverture d'entrée de vapeur reliée fluidiquement au deuxième orifice d'admission de vapeur (34) et une deuxième ouverture de sortie de vapeur (370) débouchant dans la chambre interne (35), et
∘ au moins une ouverture d'évacuation de vapeur (38) prévue sur le couvercle (11) et reliée fluidiquement à la chambre interne (35) délimitée par le couvercle (11), l'au moins une ouverture d'évacuation de vapeur (38) étant configurée pour permettre une évacuation de la vapeur contenue dans la chambre interne (35) à l'extérieur du couvercle (11),
**caractérisée en ce que** la bouilloire (2) comporte en outre un dispositif de mise à l'air libre (39) prévu sur le couvercle (11) et configuré pour relier fluidiquement le volume interne (5), délimité par le contenant (4), à la chambre interne (35), délimitée par le couvercle (11), lorsque le couvercle (11) ferme le contenant (4), le dispositif de mise à l'air libre (39) comportant un orifice de mise à l'air libre (41) débouchant dans la face inférieure (12) du couvercle (11).

2. Bouilloire (2) selon la revendication 1, dans laquelle l'orifice de mise à l'air libre (41) est un orifice calibré.

3. Bouilloire (2) selon la revendication 1 ou 2, dans laquelle l'orifice de mise à l'air libre (41) est situé dans une moitié arrière de la face inférieure (12) du couvercle (11).

4. Bouilloire (2) selon l'une quelconque des revendications 1 à 3, dans laquelle l'orifice de mise à l'air libre (41) est situé à proximité d'un bord périphérique de la face inférieure (12) du couvercle (11).

5. Bouilloire (2) selon l'une quelconque des revendications 1 à 4, dans laquelle l'orifice de mise à l'air libre (41) est configuré pour être situé à l'opposé du bec verseur (9) par rapport à l'axe longitudinal central (A) du contenant (4).

6. Bouilloire (2) selon l'une quelconque des revendications 1 à 5, dans laquelle l'orifice de mise à l'air libre (41) présente une section de passage inférieure à la section de passage de chacun des premier et deuxième orifices d'admission de vapeur (33, 34).

7. Bouilloire (2) selon l'une quelconque des revendications 1 à 6, dans laquelle le dispositif de mise à l'air libre (39) comporte un élément de filtration (42) configuré pour filtrer un fluide s'écoulant à travers l'orifice de mise à l'air libre (41).

8. Bouilloire (2) selon l'une quelconque des revendications 1 à 7, dans laquelle la bouilloire (2) est dépourvue d'élément d'obturation de l'orifice de mise à l'air libre (41).

9. Bouilloire (2) selon l'une quelconque des revendications 1 à 7, dans laquelle le dispositif de mise à l'air libre (39) comporte une valve positionnée en travers de l'orifice de mise à l'air libre.

10. Bouilloire (2) selon l'une quelconque des revendications 1 à 9, dans laquelle la bouilloire (2) est configurée de telle sorte que, lorsque la bouilloire (2) est renversée et que la poignée de préhension (8) et un premier côté latéral du contenant (4) reposent de manière stable sur une surface horizontale, le premier orifice d'admission de vapeur (33) est situé au-dessus du niveau d'eau dans le volume interne (5), et de telle sorte que, lorsque la bouilloire (2) est renversée et que la poignée de préhension (8) et un deuxième côté latéral du contenant (4) reposent de manière stable sur une surface horizontale, le deuxième orifice d'admission de vapeur (34) est situé au-dessus du niveau d'eau dans le volume interne (5).

11. Bouilloire (2) selon l'une quelconque des revendications 1 à 10, dans laquelle chacun des premier et deuxième conduits d'écoulement de vapeur (36, 37) présente une forme générale en V, la forme générale en V, définie par chacun des premier et deuxième conduits d'écoulement de vapeur (36, 37), présentant une pointe qui est située dans une partie arrière du couvercle (11).

12. Bouilloire (2) selon la revendication 11, dans laquelle le premier orifice d'admission de vapeur (33) est positionné à proximité de la deuxième ouverture de sortie de vapeur (370) et le deuxième orifice d'admission de vapeur (34) est positionné à proximité de la première ouverture de sortie de vapeur (360), et dans laquelle la pointe de la forme générale en V définie par le premier conduit d'écoulement de vapeur est située à proximité de la pointe de la forme générale en V définie par le deuxième conduit d'écoulement de vapeur.

## Patentansprüche

1. Wasserkocher (2) umfassend:
- einen Behälter (4) mit einer zentralen Längsachse (A) und begrenzend ein inneres Volumen (5), das dazu bestimmt ist, Wasser zu enthalten und in dem das Wasser erhitzt werden soll,
- einen Deckel (11), der konfiguriert ist, um den Behälter (4) zu schließen, wobei der Deckel (11) eine Unterseite (12) umfasst, die konfiguriert ist, um gegenüber dem inneren Volumen (5) angeordnet zu sein,
- einen Grifffesthalter (8),
- einen Ausguss (9), der konfiguriert ist, um gegenüber dem Grifffesthalter (8) relativ zur zentralen Längsachse (A) des Behälters (4) zu liegen, und
- einen Dampfabführungskreislauf konfiguriert, um Dampf außerhalb des inneren Volumens (5), der während des Kochens des im inneren Volumen (5) enthaltenen Wassers erzeugt wurde, zu führen, wobei der Dampfabführungskreislauf umfasst:
∘ eine erste Dampfeinlassöffnung (33) und eine zweite Dampfeinlassöffnung (34), die am Deckel (11) vorgesehen sind und in die Unterseite (12) des Deckels (11) münden, wobei die erste und zweite Dampfeinlassöffnungen (33, 34) konfiguriert sind, um fluidisch mit dem inneren Volumen (5) verbunden zu sein, das durch den Behälter (4) begrenzt wird, und so angeordnet sind, dass sie auf beiden Seiten einer vertikalen Mittelachse (P) des Wasserkochers (2) liegen, die durch den Grifffesthalter (8) verläuft,
∘ eine interne Kammer (35), die durch den Deckel (11) begrenzt wird,
∘ ein erster Dampfabflusskanal (36) mit einer ersten Dampfeintrittsöffnung, die fluidisch mit der ersten Dampfeinlassöffnung (33) verbunden ist, und einer ersten Dampfablassöffnung (360), die in die interne Kammer (35) mündet, und ein zweiter Dampfabflusskanal (37) mit einer zweiten Dampfeintrittsöffnung, die fluidisch mit der zweiten Dampfeinlassöffnung (34) verbunden ist, und einer zweiten Dampfablassöffnung (370), die in die interne Kammer (35) mündet, und
∘ mindestens eine Dampfabführungsmündung (38), die am Deckel (11) vorgesehen und fluidisch mit der durch den Deckel (11) begrenzten internen Kammer (35) verbunden ist, wobei die mindestens eine Dampfabführungsmündung (38) konfiguriert ist, um zu ermöglichen, dass Dampf, der in der internen Kammer (35) enthalten ist, außerhalb des Deckels (11) abgeführt wird, **dadurch gekennzeichnet, dass** der Wasserkocher (2) darüber hinaus ein Belüftungsvorrichtung (39) umfasst, die auf dem Deckel (11) vorgesehen ist und konfiguriert ist, um das durch den Behälter (4) begrenzte innere Volumen (5) fluidisch mit der durch den Deckel (11) begrenzten internen Kammer (35) zu verbinden, wenn der Deckel (11) den Behälter (4) schließt, wobei die Belüftungsvorrichtung (39) eine Belüftungsöffnung (41) umfasst, die in die Unterseite (12) des Deckels (11) mündet.

2. Wasserkocher (2) nach Anspruch 1, wobei die Belüftungsöffnung (41) eine kalibrierte Öffnung ist.

3. Wasserkocher (2) nach Anspruch 1 oder 2, wobei die Belüftungsöffnung (41) in einer hinteren Hälfte der Unterseite (12) des Deckels (11) angeordnet ist.

4. Wasserkocher (2) nach einem der Ansprüche 1 bis 3, wobei die Belüftungsöffnung (41) in der Nähe eines Randes der Unterseite (12) des Deckels (11) angeordnet ist.

5. Wasserkocher (2) nach einem der Ansprüche 1 bis 4, wobei die Belüftungsöffnung (41) konfiguriert ist, um gegenüber dem Ausguss (9) relativ zur zentralen Längsachse (A) des Behälters (4) angeordnet zu sein.

6. Wasserkocher (2) nach einem der Ansprüche 1 bis 5, wobei die Belüftungsöffnung (41) einen kleineren Durchgangsquerschnitt als der Durchgangsquerschnitt jeder der ersten und zweiten Dampfeinlassöffnungen (33, 34) hat.

7. Wasserkocher (2) nach einem der Ansprüche 1 bis 6, wobei die Belüftungsvorrichtung (39) ein Filterelement (42) aufweist, das konfiguriert ist, um ein Fluid zu filtern, das durch die Belüftungsöffnung (41) fließt.

8. Wasserkocher (2) nach einem der Ansprüche 1 bis 7, wobei der Wasserkocher (2) keinen Verschlussteil der Belüftungsöffnung (41) hat.

9. Wasserkocher (2) nach einem der Ansprüche 1 bis 7, wobei die Belüftungsvorrichtung (39) ein Ventil umfasst, das quer zur Belüftungsöffnung positioniert ist.

10. Wasserkocher (2) nach einem der Ansprüche 1 bis 9, wobei der Wasserkocher (2) so konfiguriert ist, dass, wenn der Wasserkocher (2) gekippt ist und der Grifffesthalter (8) und eine erste Seite des Behälters (4) stabil auf einer horizontalen Fläche ruhen, die erste Dampfeinlassöffnung (33) über dem Wasserstand im inneren Volumen (5) angeordnet ist, und so, dass, wenn der Wasserkocher (2) gekippt ist und der Grifffesthalter (8) und eine zweite Seite des Behälters (4) stabil auf einer horizontalen Fläche ruhen, die zweite Dampfeinlassöffnung (34) über dem Wasserstand im inneren Volumen (5) angeordnet ist.

11. Wasserkocher (2) nach einem der Ansprüche 1 bis 10, wobei jeder der ersten und zweiten Dampfabflusskanäle (36, 37) eine allgemeine V-Form aufweist, wobei die durch jeden der ersten und zweiten Dampfabflusskanäle (36, 37) definierte allgemeine V-Form eine Spitze hat, die sich im hinteren Teil des Deckels (11) befindet.

12. Wasserkocher (2) nach Anspruch 11, wobei die erste Dampfeinlassöffnung (33) nahe der zweiten Dampfablassöffnung (370) positioniert ist und die zweite Dampfeinlassöffnung (34) nahe der ersten Dampfablassöffnung (360) positioniert ist, und wobei die durch den ersten Dampfabflusskanal definierte Spitze der allgemeinen V-Form nahe der durch den zweiten Dampfabflusskanal definierten Spitze der allgemeinen V-Form angeordnet ist.

## Claims

1. Kettle (2) comprising:
- a container (4) having a central longitudinal axis (A) and bounding an internal volume (5) intended to hold water and in which the water is intended to be heated,
- a lid (11) configured to close the container (4), the lid (11) comprising a lower face (12) configured to be located in face of the internal volume (5),
- a gripping handle (8),
- a spout (9) configured to be located opposite the gripping handle (8) relative to the central longitudinal axis (A) of the container (4), and
- a steam evacuation circuit configured to convey, outside the internal volume (5), steam generated in the internal volume (5) during boiling of the water contained in the internal volume (5), the steam evacuation circuit comprising:
∘ a first steam inlet orifice (33) and a second steam inlet orifice (34) which are provided on the lid (11) and open into the lower face (12) of the lid (11), the first and second steam inlet orifices (33, 34) being configured to be fluidly connected to the internal volume (5) bounded by the container (4), and to be disposed on either side of a vertical median plane (P) of the kettle (2) which passes through the gripping handle (8),
∘ an internal chamber (35) bounded by the lid (11),
∘ a first steam flow duct (36) comprising a first steam entry opening fluidly connected to the first steam inlet orifice (33) and a first steam exit opening (360) opening into the internal chamber (35), and a second steam flow duct (37) comprising a second steam entry opening fluidly connected to the second steam inlet orifice (34) and a second steam exit opening (370) opening into the internal chamber (35), and
∘ at least one steam evacuation opening (38) provided on the lid (11) and fluidly connected to the internal chamber (35) bounded by the lid (11), the at least one steam evacuation opening (38) being configured to allow evacuation of steam contained in the internal chamber (35) outside the lid (11), **characterized in that** the kettle (2) further comprises a venting device (39) provided on the lid (11) and configured to fluidly connect the internal volume (5), bounded by the container (4), to the internal chamber (35), bounded by the lid (11), when the lid (11) closes the container (4), the venting device (39) comprising a venting orifice (41) opening into the lower face (12) of the lid (11).

2. Kettle (2) according to claim 1, wherein the venting orifice (41) is a calibrated orifice.

3. Kettle (2) according to claim 1 or 2, wherein the venting orifice (41) is located in a rear half of the lower face (12) of the lid (11).

4. Kettle (2) according to any one of claims 1 to 3, wherein the venting orifice (41) is located near a peripheral edge of the lower face (12) of the lid (11).

5. Kettle (2) according to any one of claims 1 to 4, wherein the venting orifice (41) is configured to be located opposite the spout (9) relative to the central longitudinal axis (A) of the container (4).

6. Kettle (2) according to any one of claims 1 to 5, wherein the venting orifice (41) has a passage cross-section smaller than the passage cross-section of each of the first and second steam inlet orifices (33, 34).

7. Kettle (2) according to any one of claims 1 to 6, wherein the venting device (39) comprises a filtration element (42) configured to filter a fluid passing through the venting orifice (41).

8. Kettle (2) according to any one of claims 1 to 7, wherein the kettle (2) is devoid of a closing element of the venting orifice (41).

9. Kettle (2) according to any one of claims 1 to 7, wherein the venting device (39) comprises a valve positioned across the venting orifice.

10. Kettle (2) according to any one of claims 1 to 9, wherein the kettle (2) is configured such that, when the kettle (2) is tilted and the gripping handle (8) and a first lateral side of the container (4) rest stably on a horizontal surface, the first steam inlet orifice (33) is positioned above the water level in the internal volume (5), and such that, when the kettle (2) is tilted and the gripping handle (8) and a second lateral side of the container (4) rest stably on a horizontal surface, the second steam inlet orifice (34) is positioned above the water level in the internal volume (5).

11. Kettle (2) according to any one of claims 1 to 10, wherein each of the first and second steam flow ducts (36, 37) has a general V-shape, the general V-shape defined by each of the first and second steam flow ducts (36, 37) having a tip which is located in a rear part of the lid (11).

12. Kettle (2) according to claim 11, wherein the first steam inlet orifice (33) is positioned near the second steam exit opening (370) and the second steam inlet orifice (34) is positioned near the first steam exit opening (360), and wherein the tip of the general V-shape defined by the first steam flow duct is located near the tip of the general V-shape defined by the second steam flow duct.
